Europäisches Patentamt

European Patent Office

Office européen des brevets

(19)

(11) Numéro de publication: **0 198 737**
**B1**

## (12) FASCICULE DE BREVET EUROPEEN

(45) Date de publication du fascicule du brevet:
17.11.88

(21) Numéro de dépôt: **86400547.5**

(22) Date de dépôt: **14.03.86**

(51) Int. Cl.⁴: **D 21 B 1/32,** D 21 F 1/70,
B 03 D 1/14

(54) **Appareil de décontamination de pâte à papier.**

(30) Priorité: 29.03.85 FR 8504763

(43) Date de publication de la demande:
**22.10.86 Bulletin 86/43**

(45) Mention de la délivrance du brevet:
**17.11.88 Bulletin 88/46**

(84) Etats contractants désignés:
**DE FR GB IT SE**

(56) Documents cités:
**FR - A - 2 541 136**

(73) Titulaire: **E. + M. Lamort Société Anonyme dite:, rue de la Fontaine Ludot, F-51300 Vitry-le-François (FR)**

(72) Inventeur: **Lamort, Jean-Pierre, 3 Boulevard Carnot, F-51300 Vitry-le-François (FR)**

(74) Mandataire: **Loyer, Bertrand et al, Cabinet Pierre Loyer 77, rue Boissière, F-75116 Paris (FR)**

ACTORUM AG

**Description**

La fabrication du papier à base de fibres secondaires ou de récupération, nécessite plusieurs opérations destinées à éliminer les impuretés et adjuvants afin de rendre ces fibres plus aptes à leur utilisation dans la plupart des fabrications. C'est pourquoi, après leur remise en suspension et l'épuration plus ou moins grossière des impuretés, une phase peut être nécessaire: relever la blancheur, et dans ce cas, le désencrage s'impose.

Les cellules de désencrage conventionnelles ont l'inconvénient d'être très volumineuses et d'un faible débit, de sorte que l'encombrement au sol demandé pour l'opération de désencrage est élevé.

Dans les appareils récents, cet encombrement a été réduit par l'emploi des techniques de flottation: de l'air est injecté dans la pâte à désencrer à l'entrée de la cellule et cet air entraîne les particules d'encre vers la surface du bain pour former une mousse qui est aspirée vers un séparateur tandis que le mélange de pâte à papier et d'eau est repris par une pompe et envoyé soit vers une autre cellule de désencrage soit vers un autre appareil de préparation de la pâte.

Cependant les appareils actuels utilisant cette technique fonctionnent sur la base d'une agitation lente dans laquelle la séparation de l'air et du liquide est très progressive; par conséquent de telles cellules, notamment celles décrites aux brevets allemand 2 914 392 ou France 2 541 136, sont encore relativement encombrantes et de débit peu élevé.

En outre ces cellules ont l'inconvénient de fonctionner avec des concentrations faibles, de l'ordre de 1 à 2%, d'où une consommation d'eau de dilution très importante (Au delà de 2% des fibres emprisonnent les bulles d'air et le temps de séparation est très long).

L'invention a pour objet de remédier à ces inconvénients et vise un appareil de décontamination de pâte à papier de faible encombrement, de débit élevé, admettant des concentrations de pâtes élevées, et capable non seulement d'opérer le désencrage mais aussi la séparation de divers contaminants.

L'appareil selon l'invention est un appareil de décontamination et notamment de désencrage de pâte à papier du type à injection sous pression d'un mélange d'air et de pâte à désencrer dans un volume et séparation de la mousse de bulles d'air chargées d'encre, caractérisé en ce qu'il est constitué d'au moins un volume de révolution, divisé en au moins deux parties par au moins un anneau interne perpendiculaire à l'axe, s'étendant depuis la paroi du volume vers l'axe, les deux parties communiquant entre elles par l'ouverture centrale de l'anneau, l'injection sous pression du mélange de pâte et d'air débouchant dans la partie supérieure du volume sous forme de lame de liquide tangentielle, plate, et de grande vitesse, la sortie de bonne pâte étant placée sur la paroi latérale de la partie inférieure, également tangentiellement et le dégagement de mousse ayant lieu dans la zone centrale du volume.

De préférence:

a) le dégagement de mousse a lieu soit par débordement ou prélèvement dans la zone centrale de la partie haute, soit par gravité dans la zone centrale de la partie basse qui comporte une ouverture d'évacuation de la mousse formée d'une perforation axiale;

b) le volume est cylindrique et de préférence d'axe sensiblement vertical;

c) l'anneau est situé dans la zone médiane;

d) le diamètre interne de l'anneau est de l'ordre de 1/3 à 1/2 du diamètre du volume à mi-hauteur, ou de la partie du volume qui le précède immédiatement;

e) la vitesse tangentielle à l'entrée est de l'ordre de 3 à 4 m/sec pour un diamètre du volume de 40 à 50 centimètres;

f) la lame de pâte aérée, à l'entrée du volume a une épaisseur de 10 à 20 mm ou plus;

g) les moyens de réglage du débit sont prévus sur l'arrivée de pâte aérée et le réglage est effectué de sorte que l'épaisseur de la lame de pâte aérée, au passage de la tranche interne de l'anneau, reste faible et de l'ordre de 1 à 3 mm;

h) la hauteur du volume est du même ordre de grandeur que son diamètre;

i) l'appareil est constitué de plusieurs volumes disposés soit en série, soit en parallèle, et les volumes peuvent notamment être superposés, alignés, ou disposés en couronne;

j) les volumes sont superposés, communiquent axialement entre eux et la sortie de pâte de chaque volume est en communication avec l'entrée du volume suivant, avec interposition préférentielle d'une pompe et d'un injecteur;

k) la communication axiale des volumes superposés est une ouverture circulaire de circulation de la mousse, comportant un rebord cylindrique parallèle à l'axe, s'étendant vers l'intérieur du volume qui le précède;

l) le diamètre de l'ouverture de communication est inférieur au diamètre interne de l'anneau qui la précède immédiatement;

m) l'ouverture d'évacuation de la mousse par gravité est une ouverture de communication selon k) ci-dessus;

n) le volume comporte plusieurs anneaux internes de diamètres décroissants, séparant des parties cylindriques elles mêmes de diamètres décroissants.

L'invention est illustrée non limitativement par le dessin annexé sur lequel:

la figure 1 est une vue en perspective éclatée d'un exemple de réalisation d'un appareil selon l'invention;

la figure 2 est une coupe de l'appareil de la figure 1;

la figure 3 est une variante d'organisation de batterie de volumes;

la figure 4 est une autre variante;

la figure 5 illustre un mode de traitement des mousses associé à l'appareil de l'invention;

la figure 6 est une variante à étages superposés;

la figure 7 est une variante à plusieurs anneaux.

La description qui suit se rapporte au désencrage de la pâte à papier bien que l'appareil puisse être utilisé à la suspension d'autres impuretés ou contaminants.

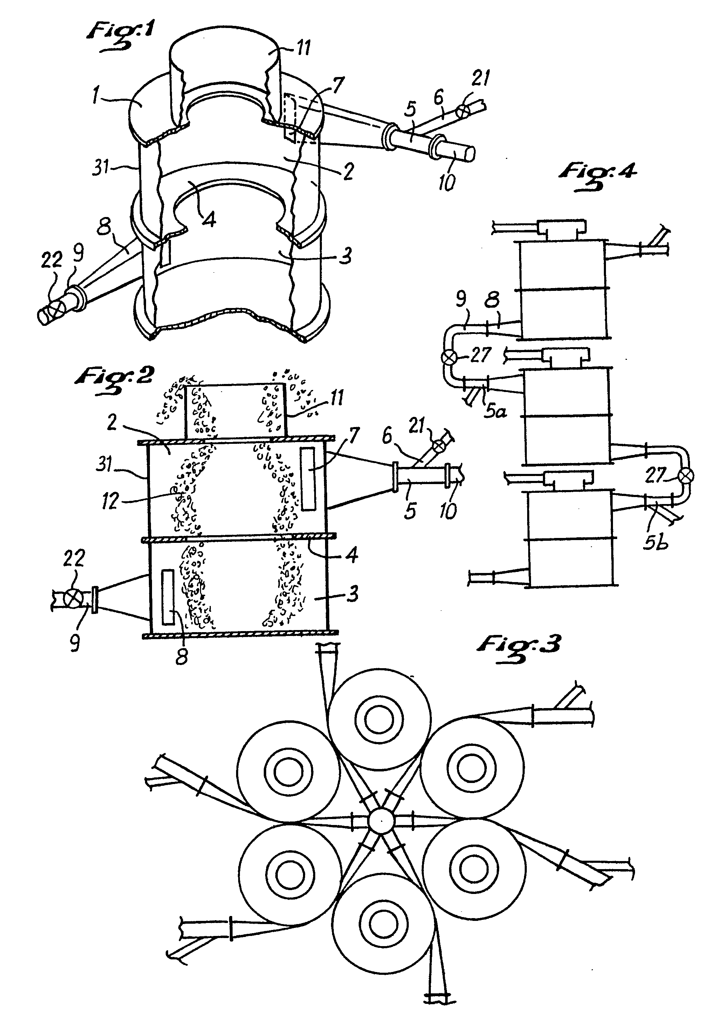

En se reportant aux figures 1 à 4, on voit que l'appareil de l'invention est constitué d'au moins un volume de révolution 1 divisé en deux parties 2 et 3 par un anneau médian 4. Celui-ci s'étend depuis la paroi de révolution 31 du volume, vers l'intérieur perpendiculairement à l'axe.

Selon les figures 1 et 2, il s'agit d'un cylindre de diamètre voisin de sa hauteur, le diamètre interne ouvert de l'anneau 4 étant de l'ordre du tiers ou de la moitié du diamètre du cylindre.

L'émulsion d'air et de pâte réalisée par l'injecteur 5, avec son arrivée d'air 6, et de pâte 10, est envoyée dans la partie haute 2, tangentiellement, et sous forme de lame mince de grande vitesse par l'ajutage 7; l'épaisseur de la lame à l'entrée est de préférence de l'ordre de 10 à 20 mm.

La vitesse d'arrivée peut varier dans d'assez larges limites selon le diamètre du volume 1 au niveau de l'arrivée 7. Pour un diamètre de l'ordre de 400 à 500 mm, une vitesse de 3 à 4 m/sec convient. Cependant, de bons résultats sont obtenus à partir de 1,5 à 2 m /sec.

Plus précisément, le fonctionnement de l'appareil repose sur l'obtention d'une vitesse suffisante pour que les bulles d'air se rassemblent dans la zone axiale de l'appareil sous l'effet de la force centrifuge, l'effet de pesanteur jouant un rôle négligeable. La limite supérieure de vitesse est donnée par la nécessité d'éviter que les bulles, chargées d'encre, n'explosent en provoquant une destruction prématurée de l'émulsion.

Dans la partie basse 3 de l'appareil, se trouve la sortie tangentielle 9 et au sommet, la sortie de mousse 11 par débordement ou prélèvement.

L'appareil est de préférence d'axe vertical, mais il peut aussi être d'axe horizontal avec une vitesse d'entrée suffisante pour que la pesanteur reste négligeable et une pompe 27 en sortie.

Selon une variante de l'invention illustrée sur la figure 7, dans le fond de l'appareil se trouve une ouverture 28, prévue pour la sortie de mousse par gravité.

Le fonctionnement est le suivant:

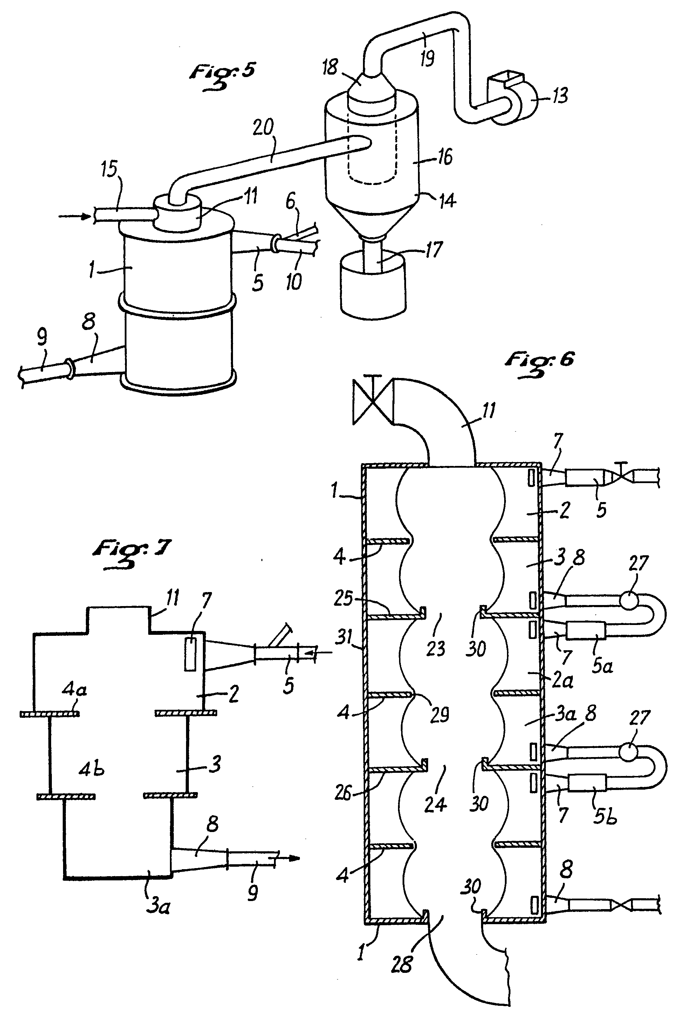

Sous l'effet de la force centrifuge, un vortex important est créé et des bulles chargées d'encre se déplacent dans la pâte vers l'axe du cylindre et se rassemblent à la surface de l'émulsion dans la zone 12. Ainsi la pâte se désencre en tournant en descendant elle recontre l'anneau 4 et a tendance à s'y accumuler pour passer ensuite de la zone 2 à la zone 3 par franchissement de la tranche interne 29. L'expérience montre que la séparation entre bulles et pâte s'effectue de façon rapide et nette au passage de cette tranche et qu'elle est favorisée par la minceur de la lame de pâte aérée au passage de ladite tranche. La pâte franchit la barrière constituée par l'anneau 4 et est à nouveau collée à la paroi de la partie basse d'où elle sort en 8, 9 tandis que la mousse d'encre se trouve chassée vers la sortie 11 ou 28 où elle peut être recueillie par débordement, aspiration ou gravité et conduite vers un appareil de séparation (figure 5).

Dans la variante des figures 1 et 2, le volume 1 est cylindrique. Il peut revêtir également une forme de révolution différente, par exemple conique. De même, l'anneau 4 peut résulter d'une déformation annulaire de la paroi du volume 1, l'essentiel étant que les parties 2 et 3 soient séparées par un obstacle occupant environ 1/3 à 1/2 du diamètre du volume 1 et agissant à la façon d'un seuil ou d'un déversoir au passage duquel la solution liquide se trouve réduite à une lame très peu épaisse, ce qui favorise la séparation des bulles d'air chargées d'encre et du liquide contenant la solution fibreuse. De préférence l'épaisseur de la lame de pâte aérée au passage de l'anneau 4 est rendue réglable et maintenue au-dessous de environ 1 cm (de préférence de l'ordre de 1 à 3 mm) en prévoyant des moyens de réglage du débit d'introduction de pâte aérée.

Dans la variante de la figure 3, l'appareil est formé d'une batterie de volumes 1 alimentés en parallèle et disposés en couronne, les sorties étant rassemblées en une sortie commune.

Dans la variante de la figure 4, les volumes sont disposés en série et superposés. A cette fin, il est préférable de prévoir une sortie 8, 9, par une ouverture en forme de lame ou fente de façon à conserver une vitesse importante de pâte à la sortie d'un volume. Cette vitesse peut également être relevée par un nouvel ensemble pompe 27 et injecteur 5a, 5b, placé à l'entrée du volume suivant.

Les dispositions des figures 3 et 4 peuvent également être combinées.

Dans la variante de la figure 5, la mousse sortant en 11 est aspirée par un ventilateur 13 vers un cyclone séparateur 14 grâce à une entrée d'air 15 prévue dans le capot de la sortie 11, le cyclone séparateur 14 comporte une chambre annulaire 16 dans laquelle débouche tangentiellement la conduite 20, une sortie inférieure de rejets 17 et une cloche centrale supérieure 18 communiquant avec le ventilateur 13 par la conduite 19.

Sous l'effet de la dépression du ventilateur 13, les mousses sont entraînées dans l'espace annulaire 16 dans lequel les bulles d'air éclatent; l'encre se dépose sur les parois de l'appareil 14 et s'écoule en 17, tandis que l'air est évacué par le ventilateur 13.

Dans la variante de la figure 6, les volumes sont non seulement superposés mais communiquent entre eux axialement en 23, 24 par une perforation centrale de leurs fonds 25, 26, de sorte qu'il y a une sortie unique 11 pour une pluralité de volumes 1. Dans cette solution comme dans la figure 4, il y a intérêt à ré-accélérer et ré-aérer la solution par les pompes 27 et les injecteurs 5a, 5b entre les différents volumes 1. Le diamètre des perforations 23, 24 est inférieur au diamètre des anneaux 4 immédiatement supérieurs.

De préférence la perforation axiale 23, 24 des fonds 25, 26 est circulaire et munie d'un rebord 30 qui s'étend depuis le fond d'un volume vers l'intérieur du même volume, c'est-à-dire vers le haut sur une hauteur de l'ordre de 20 à 40 mm. Ce rebord 30 est un obstacle à la pâte descendante: il l'empêche de passer d'un volume dans l'autre par cette perforation pour ne laisser passer que la mousse.

A titre d'exemple de réalisation, pour un volume 1 de diamètre 400 mm et un diamètre interne d'anneaux de 200 mm, la perforation 23, 24 pourra être de 150 mm et la hauteur du rebord 25 à 30 mm.

La variante de la figure 6 prévoit une ouverture 28 d'évacuation de la mousse vers le bas. Cette ouverture a de préférence les caractéristiques de perforations 23, 24 de communication, et en particulier l'ouverture comporte un rebord cylindrique 30 s'étendant vers l'intérieur du volume 1. Il est également prévu une sortie 11 vers le haut par débordement ou aspiration, de sorte que l'on peut utiliser simultanément ou alternativement selon les besoins l'une ou l'autre sortie de plus l'ouverture supérieure 11 peut également servir d'entrée d'air facilitant et permettant de régler la sortie de mousse par l'orifice inférieur 28.

Dans la variante de la figure 7, le volume 1 comporte plusieurs anneaux 4a, 4b..., de diamètres décroissants, séparant des parties cylindriques 2, 3, 3a..., elles-mêmes de diamètre décroissant et de hauteurs voisines. Les réductions successives de diamètre permettent de compenser la perte de vitesse due au frottement de la solution sur les parois à chaque étage et d'éviter l'interposition des pompes 27 et injecteurs.

L'appareil ou dispositif peut comporter jusqu'à 6 ou 10 étages afin d'obtenir une complète séparation des fibres et de l'encre. De plus, cette façon de désencrer peut, si l'agencement des étages ou passages est bien fait, faire réaliser des économies, une certaine énergie étant récupérée. De même pour les injecteurs d'aération qui, n'ayant pas de contre-pression à vaincre, peuvent être alimentés à une pression plus faible, ce qui entraîne un gain d'énergie.

L'appareil selon l'invention est de construction simple et le fonctionnement très souple: il suffit en effet d'une vanne 21 sur l'aspiration d'air 6 et d'une vanne 22 sur la sortie 9 pour faire vairer les différents paramètres: vitesse d'entrée en 7, débit en 9, sortie de mousse d'encre 11.

Par rapport à son encombrement, le débit de l'appareil est très élevé: 35 à 40 m³/heure pour un volume de hauteur et diamètre de 400 mm. Et à ce débit, l'appareil peut fonctionner sur une gamme très étendue de concentration de la pâte: les essais montrent que jusqu'à 4% et plus, la séparation est toujours aussi bonne. Il permet donc une importante économie d'eau.

L'appareil consomme peu d'énergie et est donc d'une exploitation économique.

Dans la description qui précède, on s'est référé à un volume de base 1 de diamètre et de hauteur égaux à 40 cm.

Il va de soi que ces chiffres ne sont pas limitatifs et que l'on peut réaliser des volumes plus grands (par exemple de 1 à 2 mètres de diamètre et hauteur); mais l'un des avantages de l'invention étant de permettre le désencrage à débit élevé avec des appareils de faible encombrement, un tel accroissement de dimensions n'a pas grand intérêt. De plus il oblige à de plus grandes vitesses d'entrée de pâte pour obtenir l'effet centrifuge recherché ce qui est un inconvénient.

Comme indiqué plus haut la description qui précède a été faite en rapport avec le désencrage de la pâte à papier. C'est en effet dans ce but que l'appareil a été primitivement conçu. Cependant il est apparu aux essais que non seulement les particules d'encre étaient entraînées par les bulles d'air mais également divers contaminant résiduels de faibles dimensions, qu'ils soient lourds ou légers, tels que, fines particules de plastique, de bois, granules de sable ou autres matériaux.

L'appareil selon l'invention n'est donc pas limité à l'opération de désencrage mais peut être également utilisé à la séparation de contaminants de nature diverses.

**Revendications**

1. Appareil de décontamination et notamment de désencrage de pâte à papier du type à injection sous pression d'un mélange d'air et de pâte à désencrer dans un volume et séparation de la mousse de bulles d'air chargées d'encre, caractérisé en ce qu'il est constitué d'au moins un volume (1) de révolution, divisé en au moins deux parties (2, 3...) par au moins un anneau (4) interne perpendiculaire à l'axe, s'étendant depuis la paroi (31) du volume vers l'axe, les deux parties (2, 3) communiquant entre elles par l'ouverture centrale (23, 24) de l'anneau (4), l'injection sous pression du mélange de pâte et d'air débouchant dans la partie supérieure (2) du volume sous forme de lame de liquide tangentielle, plate (7) et de grande vitesse, la sortie (8, 9) de bonne pâte étant placée sur la paroi latérale (31) de la partie inférieure (3), également tangentiellement et de dégagement de mousse ayant lieu dans la zone centrale du volume.

2. Appareil selon la revendication 1, caractérisé en ce que le volume (1) est cylindrique, et de préférence d'axe vertical.

3. Appareil selon l'une quelconque des revendications 1 e 2, caractérisé en ce que le ou les anneaux (4) séparent des zones (2, 3, 3a) de hauteurs voisines.

4. Appareil selon l'une quelconque des revendications précédentes, caractérisé en ce que le diamètre interne d'un anneau (4) est de l'ordre de 1/3 à 1/2 de celui de la partie du volume (1) qui le précède immédiatement.

5. Appareil selon l'une quelconque des revendications précédentes, caractérisé en ce que la vitesse tangentielle à l'entrée est de l'ordre de 3 à 4 m/sec pour un diamètre de 40 à 50 centimètres.

6. Appareil selon l'une quelconque des revendications précédentes, caractérisé en ce que la lame de pâte aérée à l'entrée du volume, a une épaisseur de 10 à 20 mm et plus.

7. Appareil selon l'une quelconque des revendications précédentes, caractérisé en ce que des moyens de réglages du débit sont prévus sur l'arrivé (7) de pâte aérée et le réglage est effectué de sorte que l'épaisseur de la lame de pâte aérée, au passage de la tranche interne (29) de l'anneau reste faible et de l'ordre de 1 à 3 mm.

8. Appareil selon l'une quelconque des revendications précédentes, caractérisé en ce que la hauteur du volume est du même ordre de grandeur que son diamètre.

9. Appareil selon l'une quelconque des revendications précédentes, caractérisé en ce que le dégagement de la mousse a lieu par débordement ou prélèvement dans la zone centrale (11) de la partie haute (2).

10. Appareil selon l'une quelconque des revendications 1 à 8, caractérisé en ce que le dégagement de la mousse a lieu par gravité dans la zone centrale (28) de la partie basse (3).

11. Appareil selon l'une quelconque des revendications précédentes, caractérisé en ce que la zone centrale de la partie basse (3) comporte une ouverture (28) d'évacuation de la mousse formée d'une perforation axiale.

12. Appareil selon l'une quelconque des revendications précédentes, caractérisé en ce que l'appareil est constitué de plusieurs volumes disposés soit en série soit en parallèle, et les volumes peuvent être superposés, alignés ou disposés en couronne.

13. Appareil selon l'une quelconque des revendications précédentes, caractérisé en ce que les volumes sont superposés, communiquent axialement et la sortie de chaque volume est en communication de l'entrée du volume suivant avec interposition préférentielle d'une pompe (27) et d'un injecteur (5).

14. Appareil selon la revendication 13, caractérisé en ce que la communication axiale (23, 24) des volumes superposés est une ouverture circulaire de circulation de la mousse, comportant un rebord (30) cylindrique parallèle à l'axe, s'étendant vers l'intérieur du volume qui le précède.

15. Appareil selon l'une des revendications 13 ou 14, caractérisé en ce que le diamètre de l'ouverture (23, 24) de communication est inférieur au diamètre interne de l'anneau (4) qui le précède immédiatement.

16. Appareil selon la revendication 11, caractérisé en ce que l'ouverture (28) d'évacuation de la mousse par gravité est une ouverture de communication (23, 24) selon la revendication 14.

17. Appareil selon l'une quelconque des revendications précédentes, caractérisé en ce que le volume comporte plusieurs anneaux internes de diamètres décroissants, séparant des parties cylindriques, elles-mêmes de diamètres décroissants.


**Patentansprüche**

1. Gerät zur Reinigung und insbesondere zum Deinken der Papiermasse mit Druckeinspritzung einer Mischung aus Luft und zu reinigender Papiermasse in einen Raum und Abscheidung des aus druckfarbenhaltigen Luftbläschen bestehenden Schaums, dadurch gekennzeichnet, dass es mindestens aus einem zumindest zweiteiligen (2, 3...) Umwälzraum (1) besteht, der durch mindestens einen senkrecht zur Achse stehenden, sich von der Raumwand (31) zur Achse der beiden Teile (2, 3) erstreckenden Innenring (4) geteilt wird und durch die Mittelöffnung (23, 24) des Rings (4) miteinander in Verbindung steht, wobei die Druckeinspritzung des Papiermassen-Luft-Gemischs im oberen Teil (2) des Raums in Form eines tangentiell mit hoher Geschwindigkeit eintretenden, flachen Strahls (7) erfolgt und der ebenfalls tangentielle Gut-Papiermassen-Austritt (8, 9) an der Seitenwand (31) im unteren Teil (3) liegt, während die Schaumabscheidung im Mittelteil des Raums erfolgt.

2. Gerät nach Anspruch 1, dadurch gekennzeichnet, dass der Raum (1) eine zylindrische Form und vorzugsweise eine vertikale Achse aufweist.

3. Gerät nach einem der Ansprüche 1 und 2, dadurch gekennzeichnet, dass der oder die Ringe (4) Bereiche (2, 3, 3a) etwa gleicher Höhe voneinander trennt.

4. Gerät nach einem der Ansprüche 1 bis 3, dadurch gekennzeichnet, dass der Ringinnendurchmesser (4) zirka ein Drittel bis die Hälfte des Durchmessers des unmittelbar vorhergehenden Raumteils (1) beträgt.

5. Gerät nach einem der Ansprüche 1 bis 4, dadurch gekennzeichnet, dass die tangentielle Eintrittsgeschwindigkeit bei einem Durchmesser von 40 - 50 cm ungefähr 3 - 4 m/Sekunde beträgt.

6. Gerät nach einem der Ansprüche 1 bis 5, dadurch gekennzeichnet, dass der luftdurchsetzte Papiermassen-Flachstrahl beim Raumeintritt eine Stärke von 10 - 20 mm und mehr aufweist.

7. Gerät nach einem der Ansprüche 1 bis 6, dadurch gekennzeichnet, dass an der luftdurchsetzten Papiermassen-Zuleitung (7) Durchsatzregeleinrichtungen vorgesehen sind und die Einstellung so erfolgt, dass die Stärke des luftdurchsetzten Papiermassen-Flachstrahls beim Vorbeiströmen an der Ringinnenkante (29) gering gehalten wird und ca. 1 bis 3 mm beträgt.

8. Gerät nach einem der Ansprüche 1 bis 7, dadurch gekennzeichnet, dass der Raum in etwa die gleiche Höhe wie Breite aufweist.

9. Gerät nach einem der Ansprüche 1 bis 8, dadurch gekennzeichnet, dass die Schaumabscheidung durch Überlauf oder Entnahme im Mittelbereich (11) des oberen Teils (2) erfolgt.

10. Gerät nach einem der Ansprüche 1 bis 8, dadurch gekennzeichnet, dass die Schaumabscheidung durch Schwerkraft im Mittelbereich (28) des unteren Teils (3) erfolgt.

11. Gerät nach einem der Ansprüche 1 bis 10, dadurch gekennzeichnet, dass der Mittelbereich des unteren Teils (3) eine Schaumableitungsöffnung (28) in Form einer axialen Bohrung besitzt.

12. Gerät nach einem der Ansprüche 1 bis 11, dadurch gekennzeichnet, dass das Gerät aus mehreren, entweder in Serie oder parallel geschalteten Räumen besteht, die übereinander, hintereinander oder kranzförmig angeordnet sein können.

13. Gerät nach einem der Ansprüche 1 bis 12, dadurch gekennzeichnet, dass übereinander angeordnete Räume axial miteinander in Verbindung stehen und der Austritt aus jedem Raum dem Eintritt des nachfolgenden Raums, vorzugsweise mit Zwischenschaltung einer Pumpe (27) und einer Einspritzdüse (5), in Verbindung steht.

14. Gerät nach Anspruch 13, dadurch gekennzeichnet, dass die axiale Verbindung (23, 24) der übereinander angeordneten Räume eine kreisförmige Schaumzirkulationsöffnung mit einem zylindrischen, achsenparallelen, in das Innere des vorhergehenden Raums ragenden Rand (30) darstellt.

15. Gerät nach Anspruch 13 oder 14, dadurch gekennzeichnet, dass der Durchmesser der Verbindungsöffnung (23, 24) kleiner als der Innendurchmesser des unmittelbar vorangehenden Rings (4) ist.

16. Gerät nach Anspruch 11, dadurch gekennzeichnet, dass die schwerkraftbedingte Schaumableitungsöffnung (28) eine Verbindungsöffnung (23, 24) gemäss Anspruch 14 ist.

17. Gerät nach einem der Ansprüche 1 bis 16, dadurch gekennzeichnet, dass der Raum mehrere Innenringe mit abnehmendem Durchmesser zur Unterteilung der zylindrischen Teile mit ebenfalls abnehmendem Durchmesser umfasst.

## Claims

1. An apparatus for decontaminating and, more particularly, for deinking paper pulp of the type in which a mixture of air with the pulp to be deinked is injected under pressure into a volume and the foam of ink-laden air bubbles is separated out, characterized in that it is formed of at least one volume (1) having a shape of revolution, divided into at least two parts (2, 3...) by at least one internal ring (4) perpendicular to the axis, extending from the wall (31) of the volume towards the axis, while the said parts (2, 3) communicate together through the central aperture (23, 24) of the ring (4), the injection of the pressurized mixture of pulp and air running into the upper part (2) of said volume, in the form of a high-velocity flat tangential sheet (7) of liquid, the outlet (8, 9) for the purified pulp being located tangentially on the side wall (31) of the lower part (3), and the release of foam taking place in the central zone of the volume.

2. An apparatus according to Claim 1, characterized in that the volume (1) is cylindrical, preferably with a vertical axis.

3. An apparatus according to either of Claims 1 and 2, characterized in that the ring(s) (4) are separating zones (2, 3, 3a) having similar heights.

4. An apparatus according to any of the above Claims, characterized in that the internal diameter of a ring (4) is in the range from 1/3 to 1/2 of the diameter of the part of the volume (1) which is immediately preceding said ring.

5. An apparatus according to any of the above Claims, characterized in that the tangential velocity at the inlet is in the range of about 3 to 4 metres/second for a diameter ranging from 40 to 50 centimetres.

6. An apparatus according to any of the above Claims, characterized in that the sheet of aerated pulp entering the volume has a thickness from 10 to 20 mm and above.

7. An apparatus according to any of the above Claims, characterized in that flow regulation means are provided on the inlet (7) for aerated pulp, regulation being effected so that the thickness of the aerated pulp sheet when passing over the internal edge (29) of the ring remains small, in the range from about 1 to 3 mm.

8. An apparatus according to any of the above Claims, characterized in that the height of the volume is approximately in the same range as its diameter.

9. An apparatus according to any of the above Claims, characterized in that the foam release takes place either through overflow or else by pumping out from the central zone (11) of the upper part (2).

10. An apparatus according to any of Claims 1 through 8, characterized in that the release of foam takes place through gravity in the central zone (28) of the lower part (3).

11. An apparatus according to any of the above Claims, characterized in that the central zone of the lower part (3) comprises an aperture (28) for the evacuation of foam formed by an axial perforation.

12. An apparatus according to any of the above Claims, characterized in that it is formed of a plurality of volumes arranged either in series or in parallel and in that the volumes may be stacked, aligned or placed in a circle.

13. An apparatus according to any of the above Claims, characterized in that the volumes are stacked and are communicating together axially, the outlet of each volume communicating with the inlet of the next volume, a pump (27) and an injector (5) being preferably interposed.

14. An apparatus according to Claim 13, characterized in that the axial communication (23, 24) between stacked volumes is a circular aperture for the flow of foam, comprising a cylindrical rim (30) parallel to the axis, extending upwardly toward the interior of the preceding volume.

15. An apparatus according to either of Claims 13 or 14, characterized in that the diameter of the communication aperture (23, 24) is smaller than the internal diameter of the ring (4) which is immediately above said aperture.

16. An apparatus according to Claim 11, characterized in that the aperture (28) provided for releasing foam through gravity is a communication aperture (23, 24) as claimed in Claim 14.

17. An apparatus according to any of the above Claims, characterized in that the volume comprises a plurality of internal rings having decreasing diameters, said rings separating cylindrical parts also having decreasing diameters.

0 198 737

Fig.1

Fig.2

Fig.3

Fig.4

Fig. 5

Fig. 6

Fig. 7